# EUROPÄISCHE PATENTSCHRIFT

(11) **EP 1 292 070 B1**
(45) Veröffentlichungstag und Bekanntmachung des Hinweises auf die Patenterteilung: **28.11.2007**
(21) Anmeldenummer: 02018976.7
(22) Anmeldetag: 26.08.2002
(51) Int. Cl.: H04L 12/28, H04L 12/56

(54) **Zentralgerät der Gebäudesystemtechnik und Verfahren zum Datenaustausch in einem Kommunikationsnetz der Gebäudesystemtechnik**
Central device for building systems engineering and method for the data exchange in a communication network for building systems engineering
Dispositif central pour systèmes de bâtiments et procédé pour l'échange de données dans un réseau de communication des systèmes de bâtiments

(30) Priorität: 07.09.2001 DE 10144005
(43) Veröffentlichungstag der Anmeldung: 12.03.2003
(73) Patentinhaber: SIEMENS AKTIENGESELLSCHAFT, 80333 München (DE)
(72) Erfinder: Gerlach, Horst, Dr., 93073 Neutraubling (DE)

(56) Entgegenhaltungen:
- WO-A-01/63848
- WO-A-99/07164
- WO-A-99/35753
- US NATIONAL BODY CONTRIBUTION - PROJECT: 25.01.03.02: "xTR 15045-1: Information technology architecture for residential gateways - N 893" ISO/IEC JTC 1/SC 25/WG 1 - INTERCONNECTION OF INFORMATION TECHNOLOGY EQUIPMENT HOME ELECTRONIC SYSTEM, [Online] 30. Dezember 1999 (1999-12-30), Seiten 1-30, XP002252666 Gefunden im Internet: <URL:http://sc25wg1.metrolink.com> [gefunden am 2003-08-25]
- SAITO T ET AL: "HOME GATEWAY ARCHITECTURE AND ITS IMPLEMENTATION" IEEE TRANSACTIONS ON CONSUMER ELECTRONICS, IEEE INC. NEW YORK, US, Bd. 46, Nr. 4, November 2000 (2000-11), Seiten 1161-1166, XP001093610 ISSN: 0098-3063

## Beschreibung

Die Erfindung betrifft ein Zentralgerät der Gebäudesystemtechnik, das mindestens einen bidirektionalen Transceiver mit Mitteln zum drahtlosen Austausch von Daten mit einer Anzahl von Geräten der Gebäudesystemtechnik unter Verwendung unterschiedlicher Übertragungsprotokolle und eine mit dem Transceiver über eine Schnittstelle verbundene Verarbeitungseinheit enthält. Sie betrifft weiter ein Verfahren zum Datenaustausch in einem Kommunikationsnetzwerk der Gebäudesystemtechnik.

In der Gebäudesystemtechnik sind Kommunikationssysteme, wie z. B. der Europäische Installationsbus (EIB) gebräuchlich. Derartige Kommunikationssysteme werden beispielsweise zur Steuerung von Beleuchtungs- und Klimatisierungseinrichtungen oder für Überwachungsfunktionen eingesetzt. Zur Datenübermittlung zwischen einzelnen Geräten des Kommunikationssystems oder -Netzwerks können insbesondere Funkverbindungen vorgesehen werden. Unabhängig von den genannten Kommunikationssystemen können in einem Gebäude weitere mit Funkverbindungen arbeitende Installationen, wie z. B. eine Wetterstation, vorhanden sein. Die Datenübertragung in derartigen Installationen basiert jedoch häufig auf proprietären Systemen. Ein Datenaustausch zwischen verschiedenen mit Funkverbindungen arbeitenden, auf unterschiedlichen Übertragungsstandards basierenden Kommunikationsnetzwerken und sonstigen Installationen der Gebäudesystemtechnik ist daher nicht oder nicht im gewünschten Maß möglich.

Aus einem technischen Bericht mit dem Titel "xTR 15045-1: Information Technology Architecture for Residential Gateways - N 893"; Interconnection Of Information Technology Equipment Home Electronic System - ISO/IEC JTC 1/SC 25/WG 1; Source: US National Body Contribution, http://sc25wg1.metrolink.com; Projekt: 25.01.03.02; (30-12-1999), ist ein Zentralgerät der Gebäudesystemtechnik bekannt. Dieses Gerät weist einen inneren Verarbeitungsbereich mit der Bezeichnung "Gateway Internal Protocol" auf, der über Schnittstellen mit äußeren Verarbeitungsbereichen verbunden ist und dem Datenaustausch zwischen den äußeren Verarbeitungsbereichen dient. Mindestens ein äußerer Verarbeitungsbereich dient der Kommunikation mit einem Wide Area Network. Dieser Verarbeitungsbereich ist dazu konfiguriert, Sprache oder Daten aus dem Format des Wide Area Networks in das Format des Gateway Internal Protocols und umgekehrt zu übertragen. Mindestens ein weiterer äußerer Verarbeitungsbereich ist für die Kommunikation mit einem Local A-rea Network vorgesehen. Dieser ist dazu konfiguriert, Sprache oder Daten aus dem Format des Local Area Networks in das Format des Gateway Internal Protocols und umgekehrt zu übertragen. Es ist auch offenbart, dass der Datenaustausch zwischen dem Zentralgerät und den angeschlossenen Netzwerken drahtlos erfolgen kann.

Aus der WO 01/63848 A1 ist ein Kommunikationsmodul für Geräte bekannt. Dieses Modul enthält einen Übersetzer für Übertragungsprotokolle, der von außen empfangene Signale in Steuersignale für das Gerät und von der Steuereinheit des Geräts empfangene Steuersignale für das Gerät in ein Übertragungsprotokoll eines Gerätekommunikationsnetzwerks umwandelt. Mit Hilfe des Moduls kann ein entsprechendes Gerät nachträglich für die Einbindung in ein Netzwerk aufgerüstet werden. Es ist auch die Möglichkeit vorgesehen, dass neue Protokolle in einen Speicher des Kommunikationsmoduls heruntergeladen werden können.

Außerdem ist aus der WO 01/09739 A1 ein Zentralgerät der Gebäudesystemtechnik bekannt, das ein Gateway mit einem Router und verschiedenen Schnittstellenkarten zur Verbindung mit externen Netzwerken und internen Kommunikationsmedien enthält. Bei den internen Kommunikationsmedien kann es sich um eine Netzleitung, eine Telefonleitung oder ein Ethernet LAN handeln. Die Schnittstellen bewirken eine Umwandlung zwischen dem Protokoll, das auf den jeweiligen Kommunikationsmedien verwendet wird, und dem Protokoll des Routers in beiden Richtungen. Verschiedene Geräte sind über gerätespezifische Schnittstellen mit den verschiedenen Kommunikationsmedien verbunden. Diese gerätespezifischen Schnittstellen bewirken eine Umwandlung zwischen den auf den jeweiligen Geräten und auf dem Zentralgerät verwendeten Protokollen, sowie eine Übersetzung der Nachrichten.

Aus der WO 01/56233 A1 ist ein drahtloses, integriertes, telefonbasiertes Heim-Gateway-System bekannt das eine Breitbandkommunikation für private Nutzer zur Verfügung stellt. Es umfasst ein tragbares drahtloses Telefon, einen Bildschirm, eine Tastatur, eine Kommunikationsschnittstelle mit einer DSL-Komponente und einer analogen Komponente, einen Netzwerkadapter, eine Telefonleitung, eine Bluetooth-Komponente, eine Komponente für eine Videokamera und eine einsteckbare Hochfrequenz-Schnittstelle.

Schließlich ist aus der EP 1 049 291 A2 ein Heim-Gateway mit einer oder mehreren Schnittstellen zur Kommunikation mit externen Netzwerken und einer Schnittstelle, zur Kommunikation mit einem internen Netzwerk bestehend aus einem dem IEEE 1394 Standard entsprechenden Bus, bekannt.

Der Erfindung liegt die Aufgabe zugrunde, eine einfach handhabbare zentrale Steuerung für funkbasierende Kommunikationssysteme der Gebäudesystemtechnik mit unterschiedlichen Übertragungsstandards anzugeben.

Bezüglich eines Zentralgerätes der eingangs genannten Art wird die Aufgabe erfindungsgemäß gelöst durch die Merkmale des Anspruchs 1. Hierbei weist das Zentralgerät der Gebäudesystemtechnik einen zum drahtlosen Datenaustausch mit verschiedenen Geräten vorgesehenen Transceivern sowie eine daran über eine Schnittstelle angeschlossene Verarbeitungseinheit auf. Innerhalb der Verarbeitungseinheit werden zu verschiedenen Geräten gehörende Daten in einem äußeren Verarbeitungsbereich mittels Treibern, die den unterschiedlichen Übertragungsprotokollen der zu verschiedenen Geräten gehörenden Daten zugeordnet sind, in ein einheitliches Datenformat umgesetzt. Der äußere Verarbeitungsbereich ist über eine interne Standardschnittstelle mit einem inneren Verarbeitungsbereich verbunden, innerhalb dessen die verschiedenen Geräte zuzuordnenden Daten im einheitlichen Datenformat verarbeitet werden. Somit können im Zentralgerät auf einfache Weise Verknüpfungen, insbesondere Wirkverbindungen, zwischen mit verschiedenen Funkübertragungsstandards arbeitenden Geräten hergestellt werden. Außerdem ist das Zentralgerät mit einer Schnittstelle ausgerüstet, über die Treiber von einem externen Datenverarbeitungssystem geladen werden können. Bei zusätzlichem Anschluss eines Gerätes an das Kommunikationsnetzwerk der Gebäudesystemtechnik ist damit eine einfache Anpassung der Funktionalität des Zentralgerätes möglich.

Zusätzlich kann eine Verbesserung der Handhabbarkeit des Zentralgerätes dadurch erreicht werden, dass eine gesonderte Schnittstelle zur drahtlosen Übermittlung eines Treibers über ein Fernschaltsystem in das Zentralgerät integriert oder an dieses angeschlossen wird.

In einer vorteilhaften Ausgestaltung kommuniziert das Zentralgerät mit Geräten, die unterschiedliche Funkfrequenzen nutzen. Damit ist auch eine simultane Datenübertragung zwischen dem Zentralgerät und verschiedenen Geräten der Gebäudesystemtechnik möglich.

Die Verarbeitungseinheit des Zentralgerätes ist in einer bevorzugten Ausführungsform drahtlos, z. B. über Funk- oder Infrarot-Verbindung, mit einer Bedienoberfläche gekoppelt.

Bezüglich des Verfahrens wird die genannte Aufgabe erfindungsgemäß gelöst durch die Merkmale des Anspruchs 5. Vorteilhafte Weiterbildungen sind Gegenstand der Unteransprüche 6 und 7.

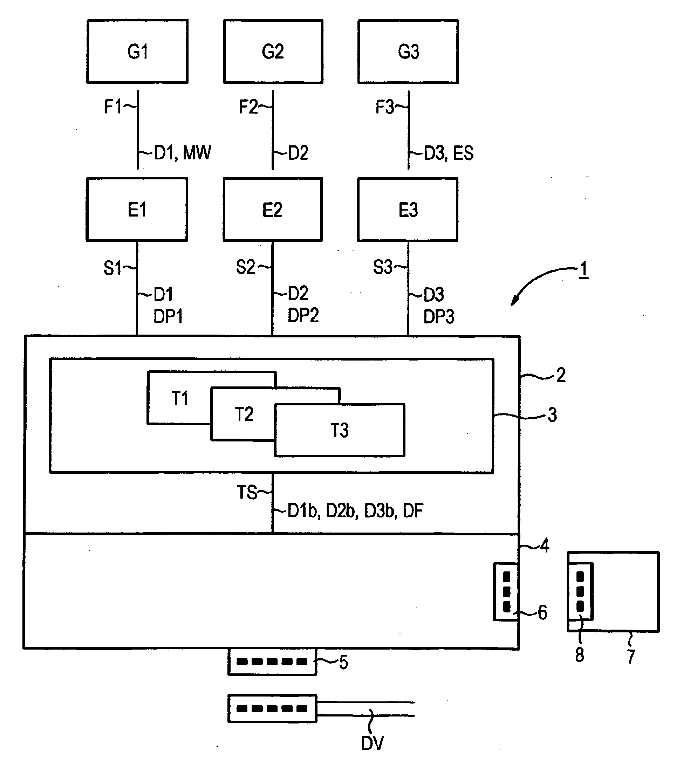

Nachfolgend wird ein Ausführungsbeispiel der Erfindung anhand einer Zeichnung näher erläutert. Dabei zeigt die einzige Figur schematisch den Aufbau eines Zentralgerätes der Gebäudesystemtechnik mit über drahtlose Verbindungen angeschlossenen Geräten.

In der Figur ist ein Zentralgerät 1 mit einer Verarbeitungseinheit 2 dargestellt, die einen äußeren Verarbeitungsbereich 3 und einen inneren Verarbeitungsbereich 4 umfasst. Am äußeren Verarbeitungsbereich 2 sind über Schnittstellen S1 bis S3 drei Transceiver E1 bis E3 angeschlossen. Es bestehen Funkverbindungen zwischen den Transceivern E1 bis E3 und drei Geräten G1 bis G3 eines Kommunikationsnetzwerkes der Gebäudesystemtechnik, wobei Funkfrequenzen F1 bis F3 genutzt werden. Hierbei kann ein Transceiver E1 bis E3 auch in nicht näher dargestellter Weise mit mehreren Geräten G1 bis G3 verknüpft sein und/oder mehrere Frequenzen F1 bis F3 und/oder Bitcodierungen nutzen. Ebenso kann ein Gerät G1 bis G3 durch ein vollständiges Kommunikationsnetzwerk, z. B. ein EIB-Netzwerk, substituiert werden. Anstelle der drei Transceiver E1 bis E3 können auch mehr oder weniger Transceiver vorgesehen sein.

Die Transceiver E1 bis E3 sind je nach Ausführungsform auf unterschiedliche Übertragungsverfahren zugeschnitten und/oder sind in der Lage, unterschiedliche Übertragungsverfahren automatisch zu erkennen und die in diesem Übertragungsverfahren übertragenen Informationen zu codieren beziehungsweise zu decodieren. Die Anzahl der benötigten Transceiver E1 bis E3 hängt von dieser Transceiverfunktion ab, das heißt ob diese mehr oder weniger speziell oder universell ist.

Zwischen den Geräten G1 bis G3 und den Transceivern E1 bis E3 besteht eine bidirektionale Datenverbindung, wobei im Folgenden die Sendung von Daten D1 bis D3 von den Geräten G1 bis G3 an die Transceiver E1 bis E3 näher betrachtet wird. Die Transceiver E1 bis E3 leiten die Daten D1 bis D3 mit jeweiligen Übertragungsprotokollen DP1 bis DP3 über die Schnittstellen S1 bis S3 an den äußeren Verarbeitungsbereich 3 innerhalb der Verarbeitungseinheit 2. Im äußeren Verarbeitungsbereich 3 erfolgt mittels Treibern T1 bis T3 eine Konvertierung der Daten D1 bis D3 in ein einheitliches Datenformat DF. Über eine interne Standardschnittstelle TS werden die Daten D1b bis D3b, die durch Konvertierung der Daten D1 bis D3 in das Datenformat DF erzeugt wurden, zum inneren Verarbeitungsbereich 4 geleitet. Im inneren Verarbeitungsbereich 4 sind beliebige Verknüpfungen der im einheitlichen Datenformat DF vorliegenden Daten D1b bis D3b möglich. Beispielsweise kann ein von dem Gerät G1 als Teil der Daten D1 an die Verarbeitungseinheit 2 übermittelter Messwert MW als Eingangssignal ES innerhalb der Daten D3 dem Gerät G3 zugeleitet werden. Zusätzlich kann die Möglichkeit einer direkten Signalübertragung, beispielsweise interrupt-gesteuert, zwischen einem Transceiver E1 bis E3 und dem inneren Verarbeitungsbereich 4 vorgesehen sein.

Die Verarbeitungseinheit 2 kann über eine Schnittstelle 5 mit einem externen Datenverarbeitungssystem DV verbunden werden. Hierbei kann es sich beispielsweise um ein lokales Netzwerk, z. B. Ether-Net, oder um das Internet handeln. Damit können auf einfache Weise über die Schnittstelle 5 Treiber T1 bis T3 in die Verarbeitungseinheit 2 heruntergeladen werden.

Eine weitere Schnittstelle 6 der Verarbeitungseinheit 2 ist zur Verknüpfung mit einer Bedienoberfläche 7 vorgesehen, die eine zugehörige Schnittstelle 8 aufweist. Die Bedienoberfläche 7 kann als berührungsempfindliche Anzeige, sogenannter Touchscreen, oder beispielsweise als LCD-Anzeige mit Tastatur ausgeführt sein.

## Patentansprüche

1. Zentralgerät der Gebäudesystemtechnik, das mindestens einen bidirektionalen Transceiver (E1)mit Mitteln zum drahtlosen Austausch von Daten (D1, D2) mit einer Anzahl von Geräten (G1, G2) der Gebäudesystemtechnik unter Verwendung unterschiedlicher Übertragungsprotokolle (DP1, DP2) und eine mit dem Transceiver (E1) über eine Schnittstelle (S1) verbundene Verarbeitungseinheit (2)enthält, die
- einen äußeren Verarbeitungsbereich (3) mit Mitteln zur Konvertierung der Daten (D1, D2) mit den unterschiedlichen Übertragungsprotokollen (DP1, DP2) mittels diesen zugeordneten Treibern (T1, T2) in Daten (D1b, D2b) in einem einheitlichen Datenformat (DF) und
- einen mit dem äußeren Verarbeitungsbereich (3) über eine interne Standardschnittstelle (TS) verbundenen inneren Verarbeitungsbereich (4) mit Mitteln zur Verarbeitung der den unterschiedlichen Geräten (G1, G2) zuzuordnenden Daten (D1b, D2b) Datenformat (DF) wobei die interne Standardschnittstelle dermaßen gestaltet ist, dass sie die in das einheitliches Datenformat (DF) konvertierten Daten (D1b, D2b) zu dem inneren Verarbeitungsbereich leitet, sowie
- eine Schnittstelle in dem einheitlichen (5) zur Übermittlung der Treiber (T1, T2) von einem Datenverarbeitungssystem (DV) in die Verarbeitungseinheit (2) aufweist.

2. Zentralgerät nach Anspruch 1, **dadurch gekennzeichnet, dass** für den Austausch von Daten (D1, D2) zwischen den Geräten (G1, G2) und der Verarbeitungseinheit (2) mehrere Frequenzen (F1, F2) und/oder Bitcodierungen vorgesehen sind.

3. Zentralgerät nach einem der Ansprüche 1 oder 2, **gekennzeichnet durch** einen integrierten Transceiver (E1) mit Mitteln zur Erkennung und automatischen Umsetzung unterschiedlicher Frequenzen (F1, F2) und/oder Bitcodierungen.

4. Zentralgerät nach einem der Ansprüche 1 bis 3, **genzeichnet durch** eine Bedienoberfläche (7), die drahtlos mit der Verarbeitungseinheit (2) gekoppelt ist.

5. Verfahren zum drahtlosen Datenaustausch für ein Zentralgerät (1) der Gebäudesystemtechnik, das mindestens einen bidirektionalen Transceiver (E1) zum drahtlosen Austausch von Daten (D1, D2) mit einer Anzahl von Geräten (G1, G2) der Gebäudesystemtechnik und eine mit dem Transceiver (E1) über eine Schnittstelle (S1) verbundene Verarbeitungseinheit (2) enthält,
- wobei zur Kommunikation mit den verschiedenen Geräten (G1, G2) unterschiedliche Übertragungsprotokolle (DP1, DP2) verwendet werden,
- wobei den einzelnen übertragungsprotokollen (DP1, DP2) zugeordnete Treiber (T1, T2) über eine Schnittstelle (5) von einem Datenverarbeitungssystem (DV) in die Verarbeitungseinheit (2) übermittelt werden,
- wobei die den verschiedenen Geräten (G1, G2) zuzuordnenden Daten (D1, D2) in einem äußeren Verarbeitungsbereich (3) der Verarbeitungseinheit (2) mittels der Treiber (T1, T2) in ein einheitliches Datenformat (DF) konvertiert werden,
- wobei die in ein einheitliches Datenformat (DF) konvertierten Daten (D1b, D2b) über eine interne Standardschnittstelle (TS) zu einem inneren Verarbeitungsbereich (4) geleitet werden, und
- wobei die den verschiedenen Geräten (G1, G2) zuzuordnenden Daten (D1b), D2b) in dem inneren Verarbeitungsbereich der Verarbeitungseinheit in dem einheitlichen Datenformat (DF) verarbeitet werden.

6. Verfahren nach Anspruch 5, **dadurch gekennzeichnet, dass** zwischen der Verarbeitungseinheit (2) und verschiedenen Geräten (G1, G2) eine Funkverbindung mit verschiedenen Frequenzen (F1, F2) und/oder Bitcodierungen aufgebaut wird.

7. Verfahren nach einem der Ansprüche 5 oder 6, **dadurch gekennzeichnet, dass** die Verarbeitungseinheit (2) über eine drahtlos mit dieser kommunizierenden Bedienoberfläche (7) bedient wird.

## Claims

1. Central device for building systems engineering, which contains at least one bidirectional transceiver (E1) with means for wireless exchange of data (D1, D2) with a number of devices (G1, G2) of building systems engineering using different transmission protocols (DP1, DP2) and a processing unit (2) connected to the transceiver (E1) by way of an interface (S1), said processing unit comprising
- an outer processing area (3) with means for converting the data (D1, D2) with the different transmission protocols (DP1, DP2) into data (D1b, D2b) in a uniform data format (DF) by means of drivers (T1, T2) associated with the different transmission protocols (DP1, DP2) and
- an inner processing area (4) which is connected to the outer processing area (3) by way of an internal standard interface (TS), having means for processing the data (D1b, D2b) to be assigned to the different devices (G1, G2) in the uniform data format (DF), with the internal standard interface being designed so as to route the data (D1b, D2b) converted into the uniform data format (DF) to the inner processing area,
- an interface (5) for transmitting the drivers (T1, T2) from a data processing system (DV) into the processing unit (2).

2. Central device according to claim 1, **characterised in that** several frequencies (F1, F2) and/or bit codings are provided for the exchange of data (D1, D2) between the devices (G1, G2) and the processing unit (2).

3. Central device according to one of claims 1 or 2, **characterised by** an integrated transceiver (E1) with means for recognising and automatically converting different frequencies (F1, F2) and/or bit codings.

4. Central device according to one of claims 1 to 3, **characterised by** a user interface (7), which is wirelessly coupled to the processing unit (2).

5. Method for wireless data exchange for a central device (1) of building systems engineering, which contains at least one bidirectional transceiver (E1) for wireless exchange of data (D1, D2) with a number of devices (G1, G2) of building systems engineering and a processing unit (2) connected to the transceiver (E1) by way of an interface (S1),
- with different transmission protocols (DP1, DP2) being used for communication with the different devices (G1, G2),
- with drivers (T1, T2) assigned to the individual transmission protocols (DP1, DP2) being transmitted from a data processing system (DV) into the processing unit (2) by way of an interface (5).
- with the data (D1, D2) to be assigned to the different devices (G1, G2) being converted into a uniform data format (DF) in an outer processing area (3) of the processing unit (2) by means of the drivers (T1, T2),
- with the data (D1b, D2b) converted into a uniform data format (DF) being routed to an inner processing area (4) by way of an internal standard interface (TS), and
- with the data (D1b, D2b) to be assigned to the different devices (G1, G2) being processed in the inner processing area of the processing unit in the uniform data format (DF).

6. Method according to claim 5, **characterised in that** a radio connection with different frequencies (F1, F2) and/or bit codings is established between the processing unit (2) and different devices (G1, G2).

7. Method according to one of claims 5 or 6, **characterised in that** the processing unit (2) is operated by way of a user interface (7) which communicates wirelessly herewith.

## Revendications

1. Dispositif central de la technique des systèmes de bâtiments, contenant au moins un émetteur-récepteur bidirectionnel (E1) comprenant des moyens pour l'échange sans fil de données (D1, D2) avec un nombre de dispositifs (G1, G2) de la technique des systèmes de bâtiments moyennant différents protocoles de transmission (DP1, DP2), ainsi qu'une unité de traitement (2) reliée à l'émetteur-récepteur (E1) par le biais d'une interface (S1), laquelle unité de traitement comprend
- une zone de traitement extérieure (3) comprenant des moyens pour la conversion des données (D1, D2), avec les différents protocoles de transmission (DP1, DP2), en données (D1b, D2b) dans un format de données unitaire (DF) au moyen de pilotes (T1, T2) associés aux protocoles et
- une zone de traitement intérieure (4) reliée à la zone de traitement extérieure (3) par le biais d'une interface standard interne (TS), comprenant des moyens pour traiter les données (D1b, D2b) à associer aux différents dispositifs (G1, G2) dans le format de données unitaire (DF), l'interface standard interne étant exécutée de manière à transmettre les données (D1b, D2b) converties dans le format de données unitaire (DF) vers la zone de traitement intérieure, et
- une interface (5) pour le transfert des pilotes (T1, T2) d'un système de traitement de données (DV) dans l'unité de traitement (2).

2. Dispositif central selon la revendication 1, **caractérisé en ce que** plusieurs fréquences (F1, F2) et/ou codages de bits sont prévus pour l'échange de données (D1, D2) entre les dispositifs (G1, G2) et l'unité de traitement (2).

3. Dispositif central selon l'une des revendications 1 ou 2, **caractérisé par** un émetteur-récepteur intégré (E1) pourvu de moyens pour la détection et la conversion automatique de différentes fréquences (F1, F2) et/ou différents codages de bits.

4. Dispositif central selon l'une des revendications 1 à 3, **caractérisé par** une surface de commande (7) couplé sans fil à l'unité de traitement (2).

5. Procédé d'échange sans fil de données pour un dispositif central (1) de la technique des systèmes de bâtiments contenant au moins un émetteur-récepteur bidirectionnel (E1) pour l'échange sans fil de données (D1, D2) avec un nombre de dispositifs (G1, G2) de la technique des systèmes de bâtiments et une unité de traitement (2) reliée à l'émetteur-récepteur (E1) par le biais d'une interface (S1),
- différents protocoles de transmission (DP1, DP2) étant utilisés pour la communication avec les différents dispositifs (G1, G2),
- des pilotes (T1, T2) associés aux protocoles de transmission individuels (DP1, DP2) étant transférés d'un système de traitement de données (DV) dans l'unité de traitement (2) par le biais d'une interface (5),
- les données (D1, D2) à associer aux différents dispositifs (G1, G2) étant converties dans un format de données unitaire (DF) au moyen des pilotes (T1, T2) dans une zone de traitement extérieure (3) de l'unité de traitement (2),
- les données (D1b, D2b) converties dans un format de données unitaire (DF) étant transmises vers une zone de traitement intérieure (4) par le biais d'une interface standard interne (TS) et
- les données (D1b, D2b) à associer aux différents dispositifs (G1, G2) étant traitées dans le format de données unitaire (DF) dans la zone de traitement intérieure de l'unité de traitement.

6. Procédé selon la revendication 5, **caractérisé en ce qu'**une liaison radio à plusieurs fréquences (F1, F2) et/ou codages de bits est établie entre l'unité de traitement (2) et différents dispositifs (G1, G2).

7. Procédé selon l'une des revendications 5 ou 6, **caractérisé en ce que** l'unité de traitement (2) est commandée par le biais d'une surface de commande (7) qui communique avec elle sans fil.
